# EUROPEAN PATENT APPLICATION

(11) **EP 4 620 573 A2**
(43) Date of publication of application: **24.09.2025**
(21) Application number: 25194766.9
(22) Date of filing: 05.10.2021
(51) Int. Cl.: B02B 3/00

(54) **IMPACT RING AND IMPROVED DEHULLING DEVICE**

(62) Divisional of application: 21200949.2
(71) Applicant: Bühler AG, 9240 Uzwil (CH)
(72) Inventor: Vazquez Ramirez, Moises, 8400 Winterthur (CH); Studerus, Lukas, 9244 Niederuzwil (CH); Signer, Ueli, 9242 Oberuzwil (CH)
(74) Representative: Hepp Wenger Ryffel AG

(57) **Abstract**

The present invention relates to a device (S) for dehulling of granular goods with an impact ring and one or more sensors (20, 21) for monitoring the condition of the impact ring (1), wherein the sensors are selected from the group consisting of three load sensors (20) which are connected to a support element (18) arranged on the top of the impact ring in such a way that the load sensors (20) are each arranged at an angle of 120 ° to each other, based on their attachment point on the support element (18). The present invention furthermore relates to a method for monitoring the condition of an impact ring (1) of said device (S) by determining the wear of the impact ring (1) by means of said one or more sensors (20, 21).

## Description

The present invention relates to an impact ring for a dehulling device and an improved dehulling device with such an impact ring.

Dehulling devices for dehulling granular goods such as soybeans, sunflower seeds, oats and other legumes are known. In the known dehulling devices, the granular grain to be dehulled is fed through an inlet to a distributor head such as a rotor and hurled from the circumferential distribution head through radial openings in the distributor head against one or more rough dehulling surfaces. Due to the impact against the dehulling surfaces, the shell bursts, and the content of the granular good can be separated from the shell.

Such a dehulling device is shown in DE-2916729 A1. In the dehulling device shown there, the material to be processed is fed to a distribution head that can be rotated around its longitudinal axis, and which has axis-symmetrically arranged passage openings in its wall, to which radially oriented guides connect. In the rotating distribution head, the grains are driven through the passage openings due to the centrifugal force and hurled against impact plates, where upon their impact they disintegrate into the core and shell. From the impact plates, the separated good scapes down to an outlet.

In GB-583188 A, dehulling device is described, in which an impact ring is provided as a dehulling surface. This impact ring has a layer of rubber-like material (i.e. a layer of corresponding polymer material) on its inner surface. The grains hurled away from the distribution head bounce against the polymer layer. According to this document, it has been shown that layers of rubber-like polymer material are better suited for dehulling granular material than abrasive non-elastic surfaces (such as metal surfaces), as the latter damage the material to be dehulled more than elastic materials.

During prolonged operation, the polymer layer experiences wear due to the constant impact of strongly accelerated grains. In GB-583188 A, it was proposed to move the impact ring in a wavelike manner during operation so that different surface sections of the impact ring (or polymer layer) are exposed to the impact of highly accelerated grains. Nevertheless, it is necessary to replace the impact ring after a certain period of operation.

An impact ring commonly used in dehulling devices consists of a metal layer (about 2 mm thick) and a plastic layer (about 20 mm thick), and has a significant weight, typically of about 30 kg. An exchange of the impact ring requires its removal from the dehulling device and transport to a disposal plant. This is associated with considerable burden for a single person due to the weight and size of the impact ring.

In addition, it is not possible to remove the polymer layer, which is attached to the inner surface of the impact ring by means of an adhesive, from the metal ring without leaving any residue. During removal, a significant part of the adhesive remains on the surface of the metal ring; this makes it impossible to reuse the metal ring. The metal ring must be disposed of, which is not unproblematic due to the polymer residues on a piece of metal and is a less favorable solution for ecological and economic reasons.

In addition, due to the problems associated with replacing an impact ring, the time at which such a replacement is required should be determined as precisely as possible. This point in time is reached when the polymer layer on the inner surface of the impact ring is worn out and the metal surface of the impact ring is exposed. As explained above, grains are damaged when they hit a metal surface. However, it is difficult, especially during the ongoing operation of the device, to determine the state of the polymer layer on the inner surface of the impact ring with the required accuracy.

It was the object of the present invention to provide a dehulling device which overcomes the problems described above.

This object is achieved by the impact ring and the dehulling device according to the invention.

In detail, the present invention relates to an impact ring for a device for dehulling granular goods, comprising a ring-shaped body of metal and a polymer layer on its entire inner surface, characterized in that the polymer layer is releasably arranged on the inner surface of the ring-shaped body.

The idea of the present invention is not to glue the polymer layer directly to the inner surface of the ring-shaped body of the impact ring, but to arrange it releasably. In this way, the polymer layer can be replaced if necessary, and the impact ring can be re-used.

According to one embodiment of the present invention, the polymer layer is arranged in a fastening element. The fastening element itself is designed in such a way that it can be detachably arranged on the inner surface of the ring-shaped body of the impact ring.

If the polymer layer is worn after prolonged operation, it can be easily removed from the ring-shaped body of the impact ring by detaching the fastening element, in which the polymer layer is arranged, from the ring-shaped body.

According to the invention, for the removal of the fastening element it is not necessary to remove the impact ring from the dehulling device. The ring-shaped metal body remains in the device and can be reused, while only the fastening element with the polymer layer arranged in it is replaced.

According to the invention, this eliminates the time-consuming removal and transport of the metal impact ring as well as the costly and ecologically disadvantageous disposal of the impact ring after a single use.

According to the invention, the polymer layer is preferably composed of segments which are arranged in fastening elements that are detachable from the ring-shaped body of the impact ring, wherein each segment is arranged in a separate detachable fastening element. According to a preferred embodiment, the separate detachable fastening elements comprising the polymer layer segments are arranged on the inner surface of the impact ring such that there is tension on each fastening element. In other words, the fastening elements are arranged so tightly adjacent one another that tension is generated.

The replacement of a fastening element with a polymer layer arranged therein is easier and more efficient when not a single fastening element is used that is circumferential on the entire inner surface of the ring-shaped body of the impact ring with a single contiguous polymer layer arranged therein, but when the polymer layer is divided into segments, each of which is arranged in one fastening element or in separate corresponding fastening elements.

According to the invention, the polymer layer is preferably composed of 1-30, more preferably 3-10 and particularly preferably 4-8 segments.

The full inner surface of the ring-shaped body of the impact ring is thus covered either by a single contiguous polymer layer or by polymer layer segments. The sum of the widths of the segments used thus corresponds to the inner diameter of the ring-shaped body of the impact ring. Excluded from this is only the small part of the inner surface, which is covered by parts of the fastening element(s).

The polymer layer can consist of any polymer material, which is usually used for impact ring coatings in dehulling devices. Preferably, it is a material with elastic properties.

According to the invention, each detachable fastening element is preferably made of a plastic material. Since most of the surface of the fastening element facing away from the ring-shaped body of the impact ring is covered by the polymer layer, it is not necessary for the fastening layer to be made of the same polymer material as the polymer layer.

According to a preferred embodiment of the invention, each fastening element has a height which essentially corresponds to the height of the ring-shaped body of the impact ring. The minimum height of each fastening element should not be less than the height of the ring-shaped body of the impact ring so that the entire inner surface thereof is covered when the fastening element(s) are arranged on it.

According to the invention, the fastening element(s) are designed in such a way that they can be detachably connected to the inner surface of the ring-shaped body of the impact ring. In principle, all common detachable connections are suitable for this purpose. Examples include screw connections or clamping connections.

According to a preferred embodiment of the invention, each detachable fastening element has parts at its upper and lower end, with which the fastening element can be detachably attached to the inner surface of the ring-shaped body of the impact ring. By simultaneously connecting the upper end and the lower end of the fastening element with the ring-shaped body of the impact ring, a safe and reliable arrangement of the fastening element(s) on the ring-shaped body of the impact ring is achieved, which can also be maintained during the operation of the dehulling device.

According to one embodiment of the present invention, the parts at the upper end of the fastening element(s) are clamping connections. This allows easy attachment of the fastening element(s) to the ring-shaped body of the impact ring, for example when the impact ring is in a dehulling device. For this purpose, the fastening element(s) at their upper end have, for example, clamps which interact precisely with a terminal edge of the ring-shaped body of the impact ring and can thus provide the desired clamping connection. The fastening element(s) can then simply be clamped from one side onto the impact ring and thus fixed.

According to a further embodiment of the present invention, the parts at the lower end of the fastening element(s) are screw connections. With the help of the screw connections, an even stronger attachment on the ring-shaped body of the impact ring is possible than with clamping connections. For this purpose, the fastening element(s) at their lower end, for example, have holes through which screws can be passed. According to this embodiment, the ring-shaped body of the impact ring has corresponding holes through which screws can be passed. The holes in the ring-shaped body of the impact ring are arranged in such a way that the corresponding fastening element can be brought into a position in which the respective holes in the fastening element and ring-shaped body are superimposed. A screw can then be passed through both holes and fixed, for example, with a nut.

According to a preferred embodiment of the invention, depending on its width each fastening element has 2 to 20, preferably 2 to 10 such parts at its upper and lower end.

According to a particularly preferred embodiment of the present invention, the polymer layer is divided into 6-10 segments, which are arranged accordingly in 6-10 fastening elements. According to this particularly preferred embodiment, each of these fastening elements has 2 to 4 clamping connections at its upper end and 2 to 4 holes at its lower end for the realization of screw connections.

According to the invention, the polymer layer or a segment of the polymer layer is preferably firmly connected to the corresponding detachable fastening element by an adhesive layer. This ensures that the polymer layer does not detach from the fastening element during the operation of the dehulling device. However, other common fixed connections are also conceivable.

Also, the polymer layer may be cast into the respective fastening element.

According to another embodiment of the present invention, the polymer layer is connected to the inner surface of the ring-shaped body by a clamping element.

In this embodiment, the polymer layer is positioned on the inner surface of the ring-shaped body of the impact ring. Then, a clamping element is positioned to interact precisely with a terminal edge of the ring-shaped body of the impact ring and with a terminal edge of the polymer layer, thus clamping the polymer layer firmly against the inner surface of the ring-shaped body of the impact ring.

In one variant, the ring-shaped body of the impact ring has a protuberance at its lower edge, in order to allow securing the impact ring at the dehulling device. In said variant, the polymer layer is positioned on the inner surface of the ring-shaped body of the impact ring such that its lower edge lays on the protuberance of the impact ring. By positioning the clamping element on a terminal edge of the ring-shaped body of the impact ring and the terminal edge of the polymer layer and clamping the same together, the polymer layer is firmly secured on the inner surface of the ring-shaped body of the impact ring.

In another variant, the ring-shaped body of the impact ring does not have a protuberance at its lower edge. In this case, two clamping elements are necessary for firmly securing the polymer layer on the inner surface of the ring-shaped body of the impact ring. One clamping element is positioned on the upper terminal edge of the ring-shaped body of the impact ring and the upper terminal edge of the polymer layer for clamping the same together. Another clamping element is positioned on the lower terminal edge of the ring-shaped body of the impact ring and the lower terminal edge of the polymer layer for clamping the same together.

It is possible that clamping is only performed at at least two specific portions of each terminal edge of the ring-shaped body of the impact ring. However, it is preferred to use a clamping element that covers an entire terminal edge of the ring-shaped body of the impact ring when in clamping position.

This embodiment also allows easy attachment of the polymer layer to the ring-shaped body of the impact ring, for example when the impact ring is in a dehulling device.

In both variants of this embodiment of the present invention, the clamping element may be any conventionally used clamping element. As an example, a clip may be mentioned. According to a preferred embodiment of the present invention, the clamping element is a tab. Said tab can have the shape of a ring or of a ring segment, preferably a ring in order to cover an entire terminal edge of the ring-shaped body of the impact ring when in clamping position. The width of the tab should be such that it covers the terminal edge of the polymer layer.

Said tab is attached to the ring-shaped body of the impact ring by means of fastening element(s). Preferably, the fastening element(s) are screw connections. For this purpose, the tab has holes through which screws can be passed. According to this embodiment, the ring-shaped body of the impact ring has corresponding holes through which screws can be passed. The holes in the ring-shaped body of the impact ring are arranged in such a way, for example at its terminal edge, that the corresponding tab can be brought into a position in which the respective holes in the tab and ring-shaped body are superimposed. A screw can then be passed through both holes and fixed, for example, with a nut.

Also according to this embodiment of the invention, the polymer layer is preferably composed of 1-30, more preferably 3-10 and particularly preferably 4-8 segments.

The full inner surface of the ring-shaped body of the impact ring is thus covered either by a single contiguous polymer layer or by polymer layer segments. The sum of the widths of the segments used thus corresponds to the inner diameter of the ring-shaped body of the impact ring.

The polymer layer can consist of any polymer material, which is usually used for impact ring coatings in dehulling devices. Preferably, it is a material with elastic properties.

According to this preferred embodiment of the invention, the polymer layer or each segment thereof has a height which essentially corresponds to the height of the ring-shaped body of the impact ring.

A carrier layer may be provided between the polymer layer and the inner surface of the ring-shaped body of the impact ring, at least in sections and preferably over the entire inner surface of the ring-shaped body of the impact ring. This carrier layer may serve, for example as a protective layer for the inner surface of the ring-shaped body of the impact ring when the polymer layer has been fully degraded. In another embodiment, it may serve as a support for the polymer layer. Preferably, the carrier layer is not adhered to the polymer layer (although this is possible), but is clamped against inner surface of the ring-shaped body of the impact ring along with the polymer layer. The impact ring according to the invention is intended for use in a dehulling machine.

The present invention thus also relates to a device for dehulling of granular good, comprising
- a material inlet,
- a rotor arranged below the material inlet, which has an interior for accommodating granular material from the material inlet and outlet openings communicating with the interior in its side wall, and
- an impact ring, which surrounds the rotor at a distance in a ring-shaped form,
characterized in that
the impact ring is an impact ring according to the invention.

Dehulling devices are well known and commercially available. A dehulling device that can be used according to the invention is, for example, the huller MSHA of the company Bühler.

A suitable dehulling device according to the invention comprises a material inlet through which material to be dehulled can be introduced into the dehulling device. From the inlet, the material to be dehulled can be inserted into a distribution head such as a rotor, for example by means of a guide element arranged below the material inlet, such as a funnel, through an opening on the top of the distribution head, .

The distribution head, for example rotor, is hollow in its interior and has openings in its side wall. Through these openings, the good to be dehulled, which is located in the interior of the distribution head, for example rotor, is hurled out of the distribution head and against an impact ring due to the centrifugal force caused by a rotation of the distribution head, for example rotor. According to the invention, the impact ring is as described above.

Preferably, the impact ring can be moved with the help of a lifting unit in the vertical direction (up and down). Suitable lifting units are well known.

The vertical movement of the impact ring is intended to prevent the same sections of the impact ring from being exposed to an impact of goods to be dehulled during operation.

Dehulled goods fall from the impact ring downwards through the dehulling device and enter an outlet, for example a trimelle.

The dehulling device is closed but has a cap that can be opened and closed. When the dehulling device is not in operation, opening the cap can provide access to the interior of the dehulling device. Through this access, an exchange of the fastening elements on the ring-shaped body of the impact ring or even of the entire impact ring can be carried out.

It is an advantage of the present invention that in the normal case only the fastening elements on the ring-shaped body of the impact ring and not the entire impact ring must be replaced.

The dehulling device is usually operated by an operating device such as a control cabinet. This is usually attached to the outside of the housing of the dehulling device.

Regardless of the use of the impact ring according to the invention described above, a further improvement of a dehulling device is provided according to the present invention by providing special sensors for monitoring the condition of an impact ring. The present invention thus also relates to a device for dehulling of granular good, comprising
- a material inlet,
- a rotor arranged below the material inlet, which has an interior for accommodating granular material from the material inlet and in its side wall outlet openings communicating with the interior, and
- an impact ring, in particular an impact ring as described above, which surrounds the rotor at a distance in a ring-shaped manner, wherein a polymer layer is attached to the entire surface of the impact ring facing the rotor, characterized in that
the device has one or more sensors for monitoring the condition of the impact ring, which are selected from the group consisting of load sensors and vibration sensors.

With the help of said sensor(s), the condition of the impact ring can be monitored during the operation of the dehulling device. As soon as it is determined with the help of the sensor(s) that the impact ring has reached a certain degree of wear, a corresponding notification is issued. The replacement of fastening elements or the entire impact ring can then be initiated.

In this way, it can be determined exactly when a corresponding replacement is required. The operating times of the dehulling device as well as the operating times of impact rings can be optimized.

The monitoring with sensors can be used both in dehulling devices with an impact ring according to the invention and in dehulling devices with a conventional impact ring.

By monitoring the condition of the impact ring, any damage to the goods to be dehulled is further prevented. As stated above, the good to be dehulled can be damaged if it hits a metallic surface. This is the case if the polymer layer provided thereon is completely worn and removed, at least in sections. The sensor(s) according to the invention detect a dangerous degree of wear at an early stage, so that the exchange described above can be carried out timely before the material to be dehulled is affected.

Furthermore, it is possible to use the results obtained by the sensor(s) to arrange for the timely procurement of replacement components (fastening elements with polymer segments arranged on them or the entire impact ring) and to avoid unnecessary waiting times with associated interruptions in operation.

Such monitoring is not yet known. In the prior art, the condition of an impact ring is usually surveyed by regular inspection. This is a comparatively time-consuming method.

The present invention thus also relates to a method for monitoring the condition of an impact ring of a device for dehulling of granular material, comprising the step of determining the wear of the impact ring by means of one or more sensors, wherein the sensors are selected from the group consisting of load sensors and vibration sensors.

According to an embodiment according to the invention, the monitoring of the condition of the impact ring is carried out with the help of a load sensor, preferably several load sensors, more preferably 2 to 5 load sensors.

Load sensors are known. With the help of a load sensor, the weight of a component operatively connected to the sensor can be determined and any change in weight can be detected.

If an impact ring changes its weight due to wear, i.e. it becomes lighter, this can be determined with the help of one or more load sensors. As soon as a certain threshold value for the weight of the impact ring has been undershot and this is determined by the sensors, a corresponding notification is issued by the electronic operating system that a replacement of fastening elements or the entire impact ring as described above is to be carried out.

The installation of load sensors for the correct determination of the weight of a component operatively connected to the sensor is known to those skilled in the art. The load sensor must be connected to the component in such a way that a reliable weight determination is possible.

In the case of dehulling devices, the impact ring is usually fixed in the device by means of a support element. According to a known embodiment, the impact ring is attached in the cap of the dehulling device by means of such a support element. In a preferred embodiment, in which the impact ring is to be moved vertically (up and down) by means of a lifting device, the impact ring is connected to the lifting device by means of such a support element, so that the weight of the impact ring is borne exclusively by the lifting device.

According to the invention, the load sensor(s) can be installed between the cap or lifting device and the corresponding support element.

According to a preferred embodiment of the present invention, an outer support element is arranged on the top of the impact ring. The outer support element is preferably ring-shaped. An inner support element is connected to the lifting device. Load sensors are arranged between the outer support element and the inner support element.

It is particularly preferred according to the invention that three load sensors are connected to the outer support element in such a way that two load sensors are each arranged at an angle of 120° to each other, with respect to their attachment point on the outer support element.

The values determined by the load sensors are processed in the usual way and combined to a value for the total weight of the impact ring.

According to an embodiment of the invention, the monitoring of the condition of the impact ring is carried out with the help of a vibration sensor, preferably several vibration sensors, more preferably 2 to 5 vibration sensors.

Vibration sensors are known. An exemplary vibration sensor is a piezoelectric sensor. With the help of a vibration sensor, the thickness of the polymer layer can be determined. Possible changes in thickness of the wear out layers can be determined.

If an impact ring changes its state due to wear, this can be determined with the help of one or more vibration sensors. As soon as a certain threshold value for the impact ring has been undershot and this is determined by the sensors, a corresponding notification is issued by the electronic operating system that a replacement of fastening elements or the entire impact ring as described above is to be carried out.

The installation of vibration sensors for the correct determination of the state of a component operatively connected to the sensor is known to those skilled in the art. The load sensor must be connected to the component in such a way that a reliable determination is possible.

According to the preferred embodiment of the present invention described above, an outer support element is arranged on the top of the impact ring. The outer support element is preferably ring-shaped. An inner support element is connected either to the lifting device.

In the variant of this embodiment with vibration sensors, the outer support element and the inner support element are connected to each other. On one of the support elements, preferably the inner support element, one or more vibration sensors are arranged. According to a preferred embodiment of the invention, on one of the support elements, preferably the inner support element, 2-10 vibration sensors, more preferably 3-8 vibration sensors, particularly preferably 4-6 vibration sensors are provided.

The signal determined by the vibration sensors is preferably converted from the time domain to the frequency domain to filter the signal and select only frequencies of interest.

With increased wear (i.e. the thinner the polymer layer on the ring-shaped body of the impact ring becomes), an increase in energy is observed in the range of high frequencies.

Alternatively, the signal can be analyzed in the time domain. For this purpose, the filtered signal as described above is subjected to an inverse Fourier transform and then the RMS value of the signal thus obtained is analyzed. The RMS value (also effective value) is the square mean of the signal. With increased wear (i.e. the thinner the polymer layer on the ring-shaped body of the impact ring becomes), an increase in the RMS value is observed.

The present invention is further described in more detail by means of non-limiting examples and drawings.
- Fig. 1a: shows a first embodiment of the impact ring according to the invention
- Fig. 1b: shows a second embodiment of the impact ring according to the invention
- Fig. 1c: shows a sectional view of the impact ring according to the second embodiment of the invention shown in Fig. 1b
- Fig. 2: shows an embodiment of the dehulling device according to the invention
- Fig. 3: shows a further embodiment of the dehulling device according to the invention with load sensors
- Fig. 4: shows a further embodiment of the dehulling device according to the invention with vibration sensors
- Fig. 5: shows a total weight of an impact ring determined with three load sensors
- Fig. 6: shows a frequency spectrum determined with vibration sensors
- Fig. 7: shows the RMS value of the vibration sensors

In the figures, same reference numbers denote the same components.

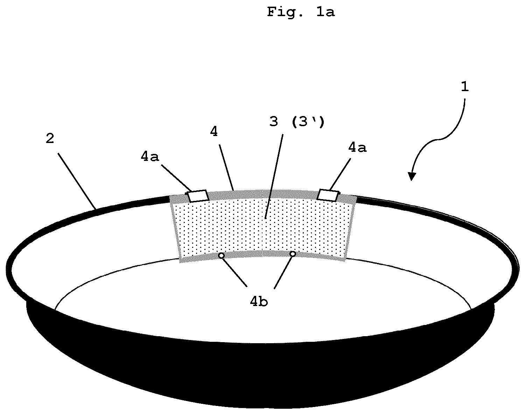

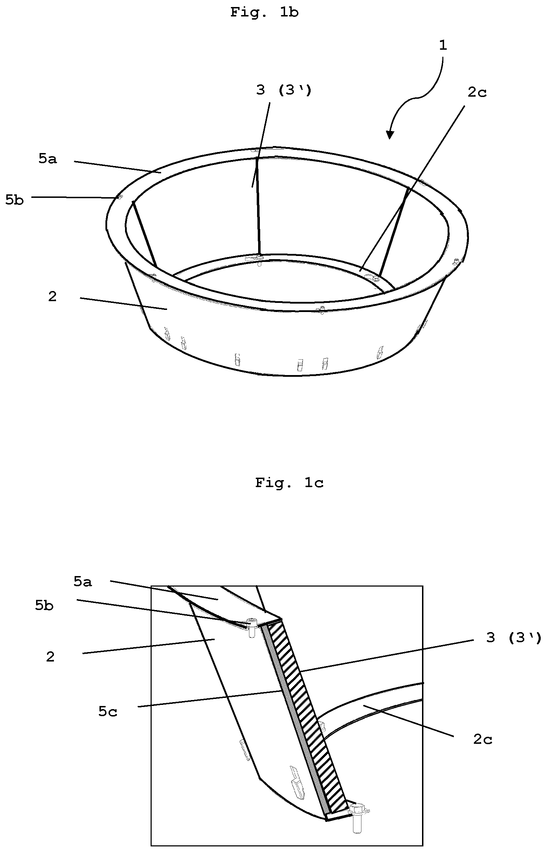

Fig. 1a shows a first embodiment of the impact ring 1 according to the invention. The impact ring 1 comprises a ring-shaped body 2 made of metal, for example iron or stainless steel. On the inner surface of the ring-shaped body 2, a polymer layer 3 is arranged. In the embodiment according to Fig. 1, this is a polymer layer 3 divided into segments 3'. The polymer layer or the segment 3'thereof is arranged in a fastening element 4, wherein in Fig. 1 for reasons of clarity only one fastening element 4 and one segment 3' of the polymer layer 3 is shown. To cover the entire inner surface of the ring-shaped body 2, several such segments 3' and fastening element 4 are to be provided accordingly, for example 4 to 6.

Segment 3' of polymer layer 3 is attached to the fastening element 4 by means of a (not shown) adhesive layer of adhesive, or alternatively by casting.

The fastening element 4 has clamping connections 4a at its upper end, here in the form of two clamps, which can be attached to the upper edge of the ring-shaped body and jammed with it.

The fastening element 4 has screw connections 4b at its lower end, here in the form of two holes. These can be brought into alignment with analog screw connections, for example holes (not shown), in the ring-shaped body 2, so that a screw connection between fastening element 4 and ring-shaped body 2 can be realized.

Fig. 1b and 1c show a second embodiment of the impact ring 1 according to the invention. The impact ring 1 comprises a ring-shaped body 2 made of metal, for example iron or stainless steel. On the inner surface of the ring-shaped body 2, a polymer layer 3 is arranged. In the embodiment according to Fig. 1b, this is a polymer layer 3 divided into segments 3'. The polymer layer 3 or the segment 3' thereof is clamped against the inner surface of the ring-shaped body 2 by means of a clamping element 5a, 5b.

In the embodiment shown in Figs. 1b and 1c, said clamping element consists of a tab 5a that is arranged over the entire upper terminal edge of the ring-shaped body 2, and is secured with the ring-shaped body 2 by means of screws 5b. In the embodiment shown in Figs. 1b and 1c, the ring-shaped body 2 comprises a protuberance 2a at its lower terminal edge, on which the polymer layer 3 or the segment 3' thereof is supported.

In the embodiment shown in Figs. 1b and 1c, furthermore a carrier layer 5c is provided between the inner surface of the ring-shaped body 2 and the polymer layer 3 or a segment 3' thereof.

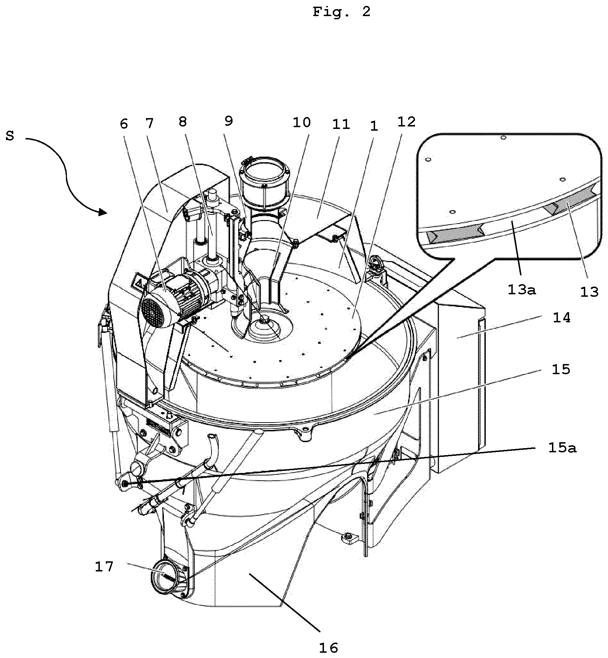

Fig. 2 shows an embodiment of the dehulling device S according to the invention. The dehulling device S comprises a material inlet 9, here in the form of an inlet tube, through which material to be dehulled can be inserted into the dehulling device S. By means of an inlet funnel 10 arranged below the inlet tube 9, the good to be dehulled can be inserted into the rotor 12, through an opening on the top of rotor 12.

The rotor 12 is hollow in its interior and has rotor segments 13 in its side wall, which are separated from each other by openings 13a (as shown in the enlarged image section). Through these openings 13a in the side wall of the rotor 12, the good to be dehulled, which is located in the interior of the rotor 12, is hurled out of the rotor 12 and against the impact ring 21 due to the centrifugal force caused by a rotation of the rotor 12 during operation. For reasons of clarity, the impact ring 1 is not shown in detail in Fig. 2.

In the embodiment according to Fig. 2, the impact ring 1 can be moved with the help of a lifting unit 8 in the vertical direction (up and down). The vertical movement of the impact ring 1 is intended to prevent the same sections of the impact ring 1 from being exposed to an impact of goods to be dehulled during operation.

The interior of the dehulling device S can be separated from the environment by a cover 7 and a cap 11 (which can be opened and closed). The cover 7 and the cap 11 are arranged on a housing 15 and connected to the housing 15 by means of a fastening 15a. A control cabinet 14 is attached to the housing 15, via which the dehulling device S is operated.

Dehulled material falls from the impact ring 1 downwards through the housing 15 and enters an outlet 16, for example a trimelle. A control stub 17 is attached to the side of the outlet 16 in order to allow access to the interior of the dehulling device S in the event of any problems.

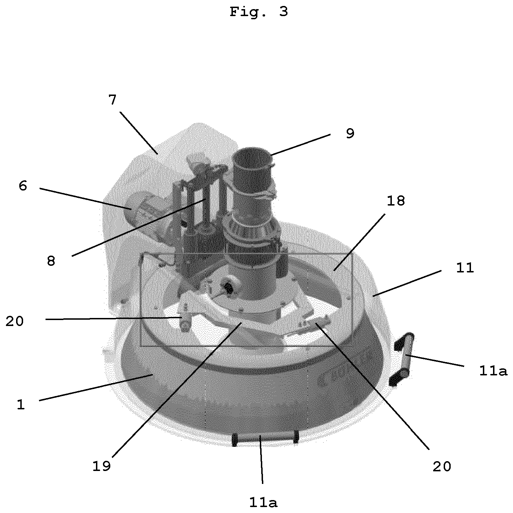

Fig. 3 shows a further embodiment of the dehulling device S according to the invention with load sensors 20. The same reference signs denote the same components as in figures 1 and 2.

An impact ring 1 is arranged within a cap 11, which can be lifted with the help of handles 11a. On the top of the impact ring 1 there is a ring-shaped outer support element 18. An inner support element 19 is connected to a lifting device 8 with a drive 6, which is located under a cover 7.

The inner support element 19 and the outer support element 18 are connected to each other via three load sensors 20 (in Fig. 3 only two of these load sensors 20 are visible, since one load sensor 20 is located behind the inlet tube 9).

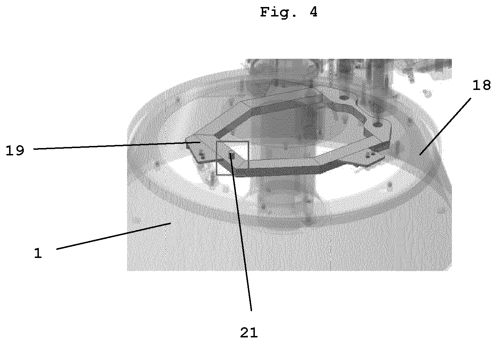

Fig. 4 shows a further embodiment of the dehulling device S according to the invention with vibration sensors 21. The same reference signs denote the same components as in figures 1 to 3.

In the embodiment according to Fig. 4, for reasons of clarity, only one vibration sensor 21 is shown. It is located on the inner support element 19. Of course, there may also be more than one vibration sensor 21.

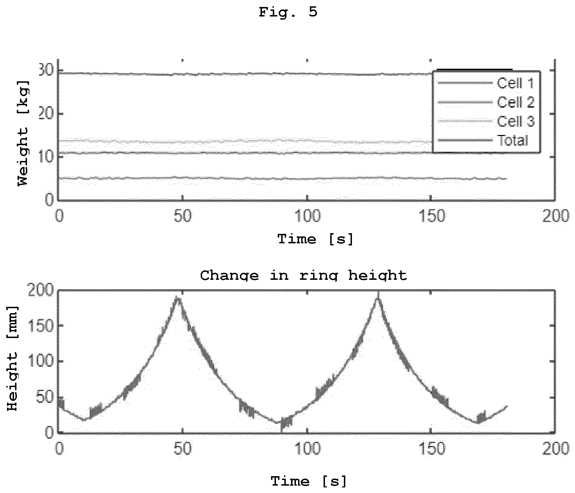

Fig. 5 shows a total weight of an impact ring (1) determined with three load sensors (20). The signals of the load sensors (20) are determined depending on the height of the impact ring and must be processed accordingly.

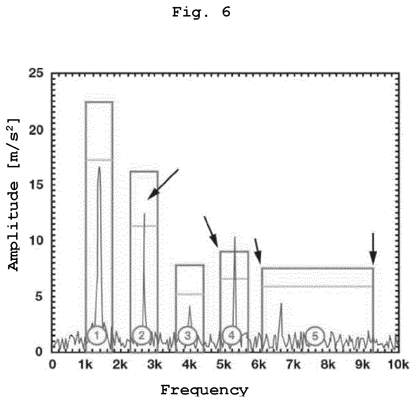

Fig. 6 shows a frequency spectrum determined with vibration sensors (21) as a function of the height of the impact ring. The frequencies are grouped into individual boxes. The signal detected by the vibration sensors was converted from the time domain to the frequency domain to filter the signal and select only frequencies of interest.

With increased wear (i.e. the thinner the polymer layer on the ring-shaped body of the impact ring becomes), an increase in energy is observed in the range of high frequencies.

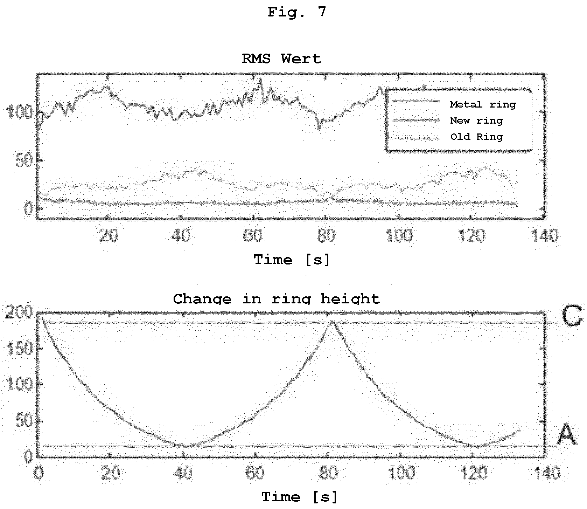

Fig. 7 shows an RMS value determined with vibration sensors (21) as a function of the height of the impact ring. The signal detected by the vibration sensors was converted from the time domain to the frequency domain to filter the signal and select only frequencies of interest. The filtered signal was subjected to an inverse Fourier transform. Subsequently, the RMS value of the signal obtained in this way was analyzed. The RMS value (also effective value) is the square mean of the signal.

Fig. 7 shows that the RMS value is very low for a new impact ring (lower curve). In the case of an old ring (i.e. ring worn out by use), a significant increase in the RMS value can be seen. As a comparison, the RMS value for a metal ring per se (i.e. a ring without a polymer layer) is shown. It can be seen that the RMS value is significantly increased here.

## Claims

1. Device (S) for dehulling of granular goods, comprising
- a material inlet (9),
- a rotor (12) arranged below the material inlet (9) which has an interior for accommodating granular material from the material inlet and outlet openings in its side wall communicating with the interior (13a), and
- an impact ring (1), which surrounds the rotor (12) at a distance in a ring-shaped manner, wherein a polymer layer (3) is attached to the entire surface of the impact ring (1) facing the rotor (12),
**characterized in that**
the device (S) comprises one or more sensors (20, 21) for monitoring the condition of the impact ring (1), wherein the sensors are selected from the group consisting of three load sensors (20) which are connected to a support element (18) arranged on the top of the impact ring in such a way that the load sensors (20) are each arranged at an angle of 120 ° to each other, based on their attachment point on the support element (18).

2. Device according to claim 1, **characterized in that** the impact ring (1) is connected to a lifting device (8) by means of said support element (18).

3. Device according to claim 2, **characterized in that** an outer support element (18) is arranged on the top of the impact ring, and an inner support element (19) is connected to the lifting device (8).

4. Device according to claim 3, **characterized in that** the load sensors (20) are arranged between the outer support element (18) and the inner support element (19).

5. Device according to any one of claims 1 to 4, **characterized in that** the polymer layer (3) is releasably arranged on the inner surface of a ring-shaped body (2) of the impact ring (1).

6. Device according to claim 5, **characterized in that** the releasable arrangement of the polymer layer (3) on the inner surface of the ring-shaped body (2) is realized by arranging the polymer layer (3) in a fastening element (4) which is detachable from the ring-shaped body (2), wherein preferably the polymer layer (3) is composed of segments (3'), which are arranged in one or more fastening elements (4) that are detachable from the ring-shaped body (2).

7. Method for monitoring the condition of an impact ring (1) of a device (S) for dehulling granular goods according to any one of claims 1 to 6, comprising the step of determining the wear of the impact ring (1) by means of said one or more sensors (20, 21).

8. The method according to claim 7, **characterized in that** when it is determined with the help of said one or more sensors (20, 21) that the impact ring (1) has reached a certain degree of wear, a corresponding notification is issued.

9. The method of claim 7 or 8, **characterized in that** by means of said load sensors (20) the weight of the impact ring (1) is determined.

10. The method of claim 9, **characterized in that** values determined by the load sensors (20) are processed and combined to a value for the total weight of the impact ring (1).
